# DEMANDE DE BREVET EUROPEEN

(11) **EP 1 285 848 A1**
(43) Date de publication de la demande: **26.02.2003**
(21) Numéro de dépôt: 02292053.2
(22) Date de dépôt: 16.08.2002
(51) Int. Cl.: B62J 17/06, B62J 19/00

(54) **Tablier de protection pour véhicule à deux roues**

(30) Priorité: 23.08.2001 FR 0111039
(71) Demandeur: Bagster, 61600 La Ferte Mace (FR)
(72) Inventeur: Courtois, Gilles, 61600 La Sauvagere (FR); Nicolas, Jacques, 61220 La Coulonche (FR)
(74) Mandataire: Rousset, Jean-Claude

(57) **Abrégé**

Le tablier de protection (10) comprend une coque rigide (11) appliquée contre la face arrière de la paroi avant (3, 4) d'un scooter (1) et présentant des moyens (16) de fixation permanente à celle-ci, et un élément intermédiaire (21) interposé et immobilisé entre ladite paroi et ladite coque, et se raccordant par son bord extérieur (24-26) à une région de protection souple (22) qui s'étend vers l'arrière.

## Description

L'invention concerne un tablier de protection pour protéger des intempéries le conducteur d'un véhicule découvert tel qu'un véhicule à deux roues muni à l'avant d'une paroi orientée sensiblement du haut vers le bas et de la gauche vers la droite, le tablier comprenant une région de fixation présentant des moyens de fixation à ladite paroi, et une région de protection sous forme d'une nappe souple propre à s'étendre vers l'arrière à partir de la région de fixation pour recouvrir en partie le corps du conducteur.

Dans les tabliers de protection connus de ce genre, la région de fixation est fixée sur la paroi du véhicule au moyen de sangles souples terminées par des crochets qui s'engagent dans des fentes de la carrosserie ou qui s'accrochent aux autres sangles. Des tendeurs sont prévus pour le réglage des sangles.

L'installation de ces tabliers de protection est longue et difficile. Ils sont facilement volés. Ils nuisent à l'esthétique du véhicule et dans certains cas masquent des éléments d'éclairage de celui-ci.

Le but de l'invention est de remédier à ces inconvénients.

L'invention vise notamment un tablier de protection du genre défini en introduction, et prévoit que la région de fixation comprend une coque rigide propre à s'appliquer contre la face arrière de ladite paroi et présentant des moyens de fixation permanente à celle-ci, et un élément intermédiaire propre à être interposé et immobilisé entre ladite paroi et ladite coque, et à se raccorder à la région de protection.

Des caractéristiques optionnelles de l'invention, complémentaires ou de substitution, sont énoncées ci-après:
- L'élément intermédiaire est sous forme d'une nappe souple formée sensiblement du même matériau et ayant sensiblement la même épaisseur que la région de protection.
- La région de protection se raccorde de manière permanente à l'élément intermédiaire.
- La région de protection se raccorde de manière amovible à l'élément intermédiaire.
- L'élément intermédiaire présente sensiblement le même contour que la coque.
- Les moyens de fixation de la coque sont propres à coopérer avec des moyens d'assemblage mutuel d'éléments constitutifs de ladite paroi.
- La coque présente sur sa face arrière au moins un accessoire pour le rangement d'un objet, ou des moyens de fixation d'un tel accessoire.

L'invention a également pour objet un véhicule découvert tel qu'un véhicule à deux roues muni à l'avant d'une paroi orientée sensiblement du haut vers le bas et de la gauche vers la droite, sur laquelle est fixé un tablier de protection tel que défini ci-dessus, ladite coque étant appliquée contre la face arrière de ladite paroi et fixée à celle-ci par lesdits moyens de fixation permanente et ledit élément intermédiaire étant interposé et immobilisé entre ladite paroi et ladite coque.

Les caractéristiques et avantages de l'invention seront exposés plus en détail dans la description ci-après, en se référant aux dessins schématiques annexés.

La figure 1 est une vue en perspective d'un scooter muni d'un tablier de protection selon l'invention.

La figure 2 est une vue en perspective éclatée de l'ensemble de la figure 1, montrant séparément le scooter et les composants du tablier de protection.

La figure 3 est une vue en perspective de la coque du tablier de protection.

La figure 4 est une vue en perspective d'un composant formant l'élément intermédiaire et la région de protection du tablier.

La figure 5 est une vue analogue à la figure 3, montrant un support prévu sur la face arrière de la coque et contenant un téléphone portable.

La figure 6 est une vue en perspective d'un support semblable à celui illustré sur la figure 5, destiné à être fixé sur la coque d'un tablier de protection selon l'invention.

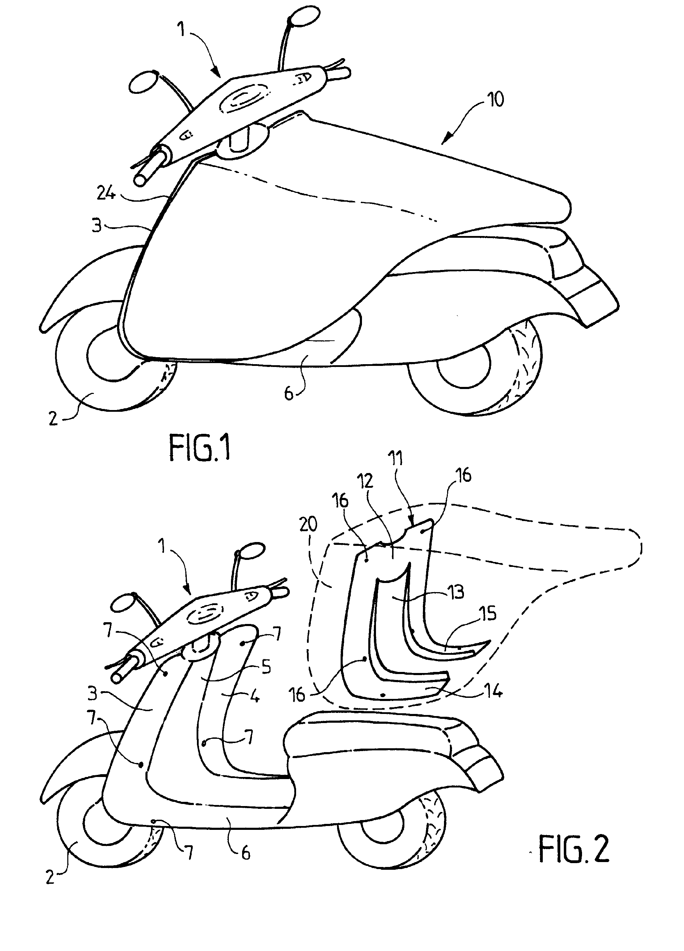

Les figures 1 et 2 montrent un scooter 1 dont la carrosserie présente de manière classique, immédiatement en arrière de la roue avant 2, une paroi formée de deux ailes 3, 4 qui s'étendent respectivement vers la gauche et vers la droite à partir d'une région centrale renflée 5 qui abrite des composants mécaniques et électriques du véhicule. La région 5, et avec elle les ailes 3 et 4, sont allongées du haut vers le bas, les ailes 3 et 4 s'incurvant vers le bas et vers l'arrière pour se raccorder à des portions de paroi horizontales 6 sur lesquelles reposent les pieds du conducteur lorsque le véhicule roule.

La figure 2 montre très schématiquement des moyens d'assemblage 7 grâce auxquels sont assemblés différents éléments constitutifs de la paroi 3, 4, par exemple une tôle métallique peinte tournée vers l'avant, et une garniture en matière plastique recouvrant la face arrière de celle-ci. Les moyens d'assemblage comprennent par exemple des vis et des trous prévus pour recevoir celles-ci.

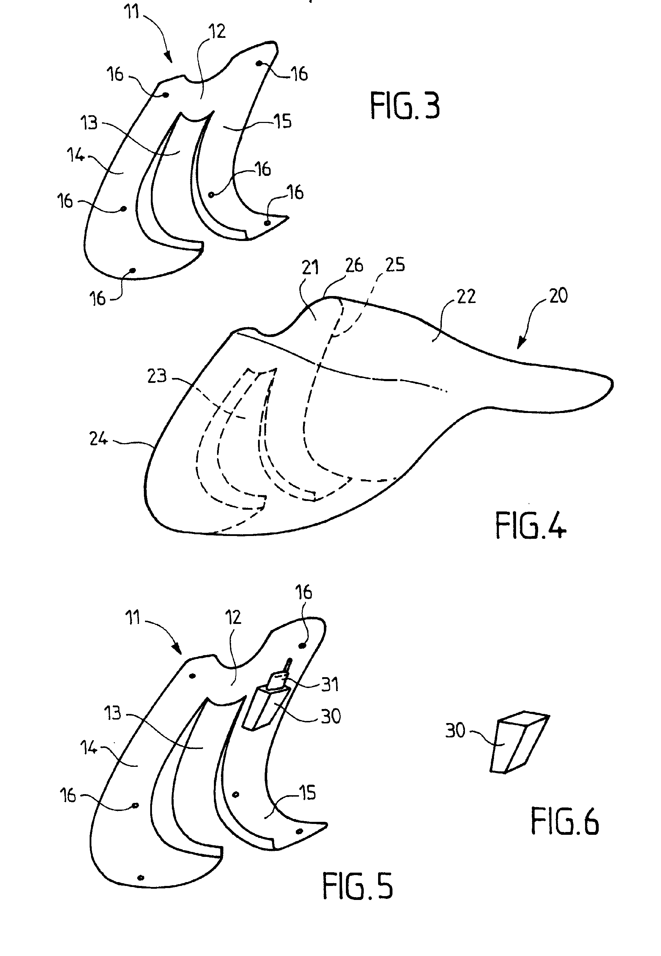

Le tablier de protection 10 selon l'invention comprend une coque rigide 11, représentée séparément sur la figure 3, réalisée par exemple par moulage ou par thermoformage de matière plastique. La coque 11 présente une forme adaptée à celle de la paroi 3, 4 de manière à s'appliquer étroitement sur la face arrière de celle-ci. La coque 11 comporte à sa partie supérieure une région incurvée 12 destinée à recouvrir la région renflée 5 du scooter. Au-dessous de la région 12, la coque présente un évidement 13 laissant subsister à sa droite et à sa gauche respectivement des bandes 14, 15 qui viennent recouvrir les ailes 3 et 4 et se prolongent au-dessus des portions de paroi 6. Des trous 16 sont ménagés à travers la coque 11, en des positions coïncidant avec les moyens d'assemblage 7 de la paroi 3, 4. Ces trous sont destinés à recevoir les vis d'assemblages de la paroi, ou si nécessaire des vis plus longues remplaçant celles-ci, pour assurer la fixation de la coque sur la paroi sans autre modification de cette dernière.

Le second composant 20 du tablier de protection 10, représenté séparément sur la figure 4, est réalisé dans un matériau souple en nappe tel que du cuir ou du tissu enduit ou non. Ce composant définit une région intermédiaire 21 et une région de protection 22. La région 21 présente une conformation adaptée à celle de la face arrière de la paroi 3, 4 et de la face avant de la coque 11 et un évidement 23 qui vient sensiblement en coïncidence avec l'évidement 13 de la coque, le contour extérieur de la région 21 venant sensiblement en coïncidence avec celui de la coque. Des trous non représentés peuvent être formés à l'avance dans la région 21 pour le passage des vis de fixation de la coque sur la paroi 3, 4. En variante, de tels trous peuvent être formés au moment du montage du tablier de protection sur le véhicule. La région de protection 22, qui dans l'exemple illustré est solidarisée en permanence à la région intermédiaire 21, se raccorde aux bords latéraux 24, 25 et au bord supérieur 26 de celle-ci. Ces deux régions peuvent être mutuellement solidarisées par exemple par collage, par couture ou par soudure. En variante, les deux régions peuvent être mutuellement attachées de manière amovible, par exemple au moyen d'une fermeture à glissière. Cette variante permet de retirer la région de protection lorsque son utilisation n'est pas justifiée par les conditions météorologiques. Dans ce cas, les opérations de démontage et de remontage de la région de protection sont naturellement plus commodes et plus rapides que les opérations de démontage et de remontage des tabliers de protection de la technique antérieure.

La figure 5 représente une coque 11 semblable à celle de la figure 3, munie sur sa face arrière d'une pochette 30 prévue pour recevoir un téléphone portable 31. Une telle pochette, ou tout autre support ou accessoire propre à recevoir des objets quelconques susceptibles d'être utiles au conducteur, peut être formée de matière avec la coque, ou rapportée sur celle-ci par exemple à l'aide de boutons-pressions, de tourniquets ou de bandes auto-agrippantes. Une pochette 30 détachable est représentée séparément sur la figure 6.

Bien que le tablier de protection selon l'invention soit plus particulièrement destiné à être monté sur un scooter, il peut également être utilisé en liaison avec d'autres véhicules à deux roues, notamment ceux du type couramment appelé "motocyclette", qui sont chevauchés par le conducteur, ou même avec des véhicules à trois ou quatre roues, pour autant qu'ils ne possèdent pas une carrosserie enveloppant entièrement le conducteur, mais présentent néanmoins une paroi avant pouvant servir de support à la région de fixation.

## Revendications

1. Tablier de protection (10) pour protéger des intempéries le conducteur d'un véhicule découvert tel qu'un véhicule à deux roues (1) muni à l'avant d'une paroi (3, 4) orientée sensiblement du haut vers le bas et de la gauche vers la droite, le tablier comprenant une région de fixation (11, 21) présentant des moyens (16) de fixation à ladite paroi, et une région de protection (22) sous forme d'une nappe souple propre à s'étendre vers l'arrière à partir de la région de fixation pour recouvrir en partie le corps du conducteur, **caractérisé en ce que** la région de fixation comprend une coque rigide (11) propre à s'appliquer contre la face arrière de ladite paroi et présentant des moyens (16) de fixation permanente à celle-ci, et un élément intermédiaire (21) propre à être interposé et immobilisé entre ladite paroi et ladite coque, et à se raccorder à la région de protection.

2. Tablier de protection selon la revendication 1, dans lequel l'élément intermédiaire est sous forme d'une nappe souple formée sensiblement du même matériau et ayant sensiblement la même épaisseur que la région de protection.

3. Tablier de protection selon l'une des revendications 1 et 2, dans lequel la région de protection se raccorde de manière permanente à l'élément intermédiaire.

4. Tablier de protection selon l'une des revendications 1 et 2, dans lequel la région de protection se raccorde de manière amovible à l'élément intermédiaire.

5. Tablier de protection selon l'une des revendications précédentes, dans lequel l'élément intermédiaire présente sensiblement le même contour que la coque.

6. Tablier de protection selon l'une des revendications précédentes, dans lequel les moyens (16) de fixation de la coque sont propres à coopérer avec des moyens (7) d'assemblage mutuel d'éléments constitutifs de ladite paroi.

7. Tablier de protection selon l'une des revendications précédentes, dans lequel la coque présente sur sa face arrière au moins un accessoire (30) pour le rangement d'un objet (31), ou des moyens de fixation d'un tel accessoire.

8. Véhicule découvert tel qu'un véhicule à deux roues (1) muni à l'avant d'une paroi (3, 4) orientée sensiblement du haut vers le bas et de la gauche vers la droite, sur laquelle est fixé un tablier de protection (10) selon l'une des revendications précédentes, ladite coque (11) étant appliquée contre la face arrière de ladite paroi et fixée à celle-ci par lesdits moyens de fixation permanente (16) et ledit élément intermédiaire (21) étant interposé et immobilisé entre ladite paroi et ladite coque.
